(19) Europäisches Patentamt / European Patent Office / Office européen des brevets

(11) **EP 4 054 983 B1**

(12) **EUROPEAN PATENT SPECIFICATION**

(45) Date of publication and mention
of the grant of the patent:
**06.05.2026 Bulletin 2026/19**

(21) Application number: **20771849.5**

(22) Date of filing: **14.09.2020**

(51) International Patent Classification (IPC):
**C02F 1/42** *(2023.01)*    **C02F 9/00** *(2023.01)*
**B01J 47/14** *(2017.01)*

(52) Cooperative Patent Classification (CPC):
**C02F 1/001;** C02F 1/283; C02F 1/42;
C02F 2201/006; C02F 2209/005; C02F 2209/055;
C02F 2209/40; C02F 2209/445; C02F 2303/16

(86) International application number:
**PCT/EP2020/075639**

(87) International publication number:
**WO 2021/089222 (14.05.2021 Gazette 2021/19)**

(54) **FILTRATION DEVICE FOR FILTERING A LIQUID AND METHOD FOR FILTERING A LIQUID**

FILTERVORRICHTUNG ZUM FILTERN VON FLÜSSIGKEITEN UND VERFAHREN ZUM FILTERN VON FLÜSSIGKEITEN

DISPOSITIF DE FILTRATION POUR LA FILTRATION DE LIQUIDE ET METHODE DE FILTRATION POUR LA FILTRATION DE LIQUIDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.11.2019 DE 102019130138**

(43) Date of publication of application:
**14.09.2022 Bulletin 2022/37**

(73) Proprietor: **BRITA SE
65232 Taunusstein (DE)**

(72) Inventors:
• **BUNNEMANN, Phillip
65599 Dornburg (DE)**
• **HAGEN, Thomas
55122 Mainz (DE)**

(56) References cited:
**EP-A1- 3 141 529        WO-A1-2014/033147
US-A1- 2011 132 818    US-A1- 2019 144 301**

**Description**

The invention relates to a filtration device for filtering a liquid and a method for operating a filtering of a liquid.

Filtration devices of the above-referenced kind are being used as water filters for everyday use in households, which is why they are also called table water filters. They are primarily used for clearing tap water of unwanted substances. Among these substances are chloride and carbonate hardness builders such as calcium and magnesia, but also lead, which finds its way into tap water through the use of lead pipes, especially in older houses.

Such filtration devices often utilize a filter medium. For example, the filter medium may be provided in a filtration cartridge which may be exchanged after the performance of the filter medium starts to decrease or in a filter medium container, wherein the filter medium itself is exchangeable.

After a while, the filter medium of such a filtration device will reach the end of its lifetime. The lifetime of a filter medium is usually defined by the filtration performance of the filter medium. If the filtration performance decreases to a minimum threshold value, the end of the lifetime of the filter medium is reached.

Within the state of the art, it is common to signal the end of the lifetime of the filter medium. For example DE 10 2014 102 583 A1, US 6,024,867 and US 2016/0121246 A1 disclose a device and methods for counting the number of times the filtration cartridge is used. After a defined number of uses, the device signals the user to replace the filtration cartridge.

US 2012/0217197 A1, DE 69 909 760 T2 and DE 10 2007 062 925 A1, EP 2 471 745 A1 disclose methods for determining the end of the lifetime of a cartridge by using erodible or soluble elements, e.g. in form of tablets. Upon dissolving, the erodible or soluble elements either activate a signaling element or decrease the flow of liquid through the filter medium.

From US 2013/0199974 A1 a device for purifying a liquid is known. The device includes a collecting vessel for an unpurified liquid, a collecting vessel for a purified liquid, a replaceable filter module filled with a filter material and an automatic means including a pneumatic pump for timed injection of air into the collecting vessel for the unpurified liquid. A positive air pressure within the range of 0.1 - 1.0 bar above the level of the unpurified liquid is maintained throughout the entire filtration cycle. The device particularly comprises a liquid level sensor that is used for automatic switching off the pneumatic pump when the unpurified liquid reaches the minimum level. The device is configured for monitoring or adjusting the pressure within the collecting vessel for the unpurified liquid to have a uniform and stable flowing of a liquid through the filter material.

Coming from US 2013/0199974 A1 the problem to be solved by the invention is to provide an improved filtration device for filtering a liquid and a method for operating the filtration device with an increased filter performance.

The problem is solved by the features of the independent claims.

In a first aspect, the invention relates to a filtration device for filtering a liquid. The filtration device comprises a storage container for unfiltered liquid, a mounting for a filter container, a filter container filled with a filter medium being mounted in the mounting, a first sensor that is configured to determine a first value $y_1$ of a parameter of the unfiltered liquid and a pump fluidically coupled to the storage container and communicatively coupled to the first sensor, wherein the pump is configured to generate a gauge pressure $P_g$ in the storage container during the filtering of the unfiltered liquid. The filtration device comprises a second sensor which is configured to determine a second value $y_2$ of the parameter of the filtered liquid. The pump is communicatively coupled to the second sensor and is configured to reduce the gauge pressure $P_g$ during the filtration process, if a parameter relation D of the first value $y_1$ and the second value $y_2$ is lower than a preset threshold, which is a preset first specific relation $D_1$.

The parameter relation D preferably means $D = y_1 - y_2$ or

$$D = 1 - \frac{y_2}{y_1}.$$

Preferably, the filtration device can have a free outlet or comprise a container for the filtered liquid.

The pump is configured to generate gauge pressures between 0,01 bar and 2 bar. Preferably, the storage container is a pressure container, which can withstand 1.2 bar, preferably 1.5 bar and especially 2.0 bar gauge pressure.

Within the scope of this invention, the term "fluidically coupled" means that the filtration device comprises means, e.g. connectors, pipes or lines, for transporting any liquid or gas from one component to another.

The mounting for the filter container, which preferably is a filter cartridge containing the filter medium, makes it easy for the user to exchange the filter medium or the container. On one hand, the filter container may, for example, be formed as a chamber in which the filter medium is put. On the other hand, the filter container may be formed as a cartridge, which contains the filter medium. Within the scope of this invention, a cartridge is a special container, which is designed for being exchanged easily by a clamp mechanism or any suitable fastener for quickly removing and reinserting the cartridge and simultaneously avoiding any bypass.

The liquid to be filtered flows through the filter medium. The flow velocity of the liquid depends on the gauge pressure $P_g$ within the storage container, which pushes the liquid through the filter medium. A greater gauge pressure $P_g$ increases the flow velocity of the liquid through the filter medium. The faster the liquid flows though the filter medium, the less time the liquid has to interact with the filter medium, i.e. to be filtered. In other words, by increasing or decreasing the pressure $P_g$ the filtering effect of the filter medium is decreased or increased, respectively. This is possible, because the filtering process is based upon a chemical reaction.

Within the scope of this invention, the filtering performance is the ratio of the amount of the filtered substances from a liquid over the amount of liquid being filtered.

The relation between the gauge pressure $P_g$ within the storage container and the filtering performance of the filter medium is used for readjusting the filtration device. Therefore, the filtration device comprises the first and the second sensor. The first sensor is used to surveil a parameter of the unfiltered liquid and the second sensor is used to surveil the same parameter like the first sensor but of the filtered liquid.

The second sensor is arranged in flow direction behind the filter medium to determine the parameter of the filtered medium. The second sensor may especially be arranged within the filter container.

The liquid to be filtered is preferably water.

The parameter may, for example, be the water hardness, Cl-content of the water, Pb-, Cu- or other metal content of the water or Geosmin-content of the water. Depending on the region, in which the filtration device is to be used, the parameter may differ.

Both sensors may be electric, electronic or electrochemical sensors, which generate electric signals depending on the measured parameter. For example, the sensors may be sensors for determining the electric conductivity or the electric resistance of the liquid, wherein the parameter is derived from the electric conductivity or the electric resistance of the liquid.

The first value determined by the first sensor and the second value determined by the second sensor are compared with each other. As long as the filtering performance is constant or nearly constant, the parameter relation D of the values should be constant or nearly constant, too. If the performance of the filter medium changes over time, i.e. if it decreases due to usage of the filter medium, the parameter relation D of the first and second value will change accordingly.

The pump is configured to react on the change of the parameter relation D by adapting its current pumping capacity, i.e. to readjust the gauge pressure $P_g$ within the storage container. In particular, the pump is configured to reduce its current pumping capacity if the parameter relation D of the first and second value falls below a preset first specific parameter relation $D_1$. The reduction of the pumping capacity reduces the gauge pressure $P_g$ on the unfiltered liquid and thus the flow velocity of the liquid through the filter medium. The reduced flow velocity of the liquid causes the liquid to have more time to interact with the filter medium and thus improving the filtering effect or filtering performance.

In one embodiment, the decrease of the filtering performance of the filter medium due to usage and the improvement of the filtering performance due to a decreasing gauge pressure $P_g$ upon the unfiltered liquid should cancel each other out and provide a constant or nearly constant filtering performance of the filter medium. In this case, the first specific parameter relation $D_1$ may be equal to a starting parameter relation $D_0$, which is the parameter relation D determined when the filtering device is used for the first time.

Both operation modes are described as idealized cases. In reality, the parameter relation D will be subject to fluctuations as the determined values of the parameter are subject to fluctuations and the described decreasing of the parameter relation D may be seen as a trend underlying the real data. The fluctuations may be caused by measurement errors of the sensors, fluctuations of the power supply of the pump, which cause fluctuations within the gauge pressure $P_g$, fluctuating quality of the liquid, e.g. fluctuating water hardness, etc.

By controlling the filtering performance, the filter medium may be used over a longer period when compared to a filter medium, which is used in a filtration device without the sensors and/or without the pump. However, if the pumping capacity is zero or at a level, which is not sufficient to press the liquid through the filter medium, the filtering performance cannot be restored to its primal level indicated by the starting parameter relation $D_0$. Now, the filter medium has to be exchanged, reactivated or recharged to fully restore its filtering performance.

In fact, the parameter relation D may rise sometimes, for example if the filter medium reacts or regenerates while the filtration device is not used, e.g. overnight.

Furthermore, the liquid within the storage container may be pressed through the filter medium by gravity and due to its own weight. The fuller the storage container, the higher is the flow velocity of the liquid. While the liquid flows through the filter medium, the storage container empties and the gravitational pull on the remaining unfiltered liquid within the storage container decreases. Thus, the flow velocity of the liquid decreases as well and the filtering performance increases. The latter is detected by the sensors as the parameter relation D increases. Upon the increasing parameter relation D, the pump may increase its pumping capacity to compensate the decreasing gravitational pull on the liquid, while the liquid is filtered.

In these cases, the sensors may determine an increasing parameter relation D and the pumping capacity may be increased accordingly to keep the filtration performance at a constant level or to decrease the waiting time for the user to wait for the liquid to be filtered.

In an embodiment, the filtration device comprises a control unit, wherein the control unit comprises a memory unit and a processing unit. The control unit is communicatively coupled to the first sensor, the second sensor and the pump. The processing unit is configured to set the pumping capacity of the pump according to the parameter relation D.

Preferably, the pump is communicatively coupled to both the first and the second sensor via the processing unit. The processing unit comprises means for determining the parameter relation D of the first value and the second value. Operation data comprising an assignment of the parameter relation D to a nominal pumping capacity or a nominal pressure value $P_0$, wherein the pump has means for reducing its current capacity to a predetermined pumping capacity.

The processing unit receives the first and second values from the first and second sensors. Then the processing unit derives the parameter relation D. The first specific parameter relation $D_1$, which is stored within the memory unit, is loaded to the processing unit and compared to the parameter relation D derived from the first value $y_1$ and the second value $y_2$. If the parameter relation D is smaller than the specific parameter relation $D_1$, the processing unit loads the assignment of the parameter relation D to the nominal pumping capacity or the nominal pressure value $P_0$ respectively and generates a signal for adjusting, i.e. decreasing or increasing, the pumping capacity to the newly assigned nominal pumping capacity. The generated signal is sent to the pump, which adjusts its pumping capacity accordingly.

In another embodiment, the liquid is water and the parameter is the hardness of the water. The filter medium may for example be an ion exchange material, which reduces the hardness of water. The sensors are configured to determine values, which represent the water hardness or which may be used to derive the water hardness, such as the electric resistance or the electric conductivity of the water.

The hardness of local tap water may vary from place to place. Determining values for characterizing the hardness of water has the advantage that the filtration device may not only adapt itself to the decreasing filtration performance of the filter medium, but the water hardness of the local tap water, too.

In further embodiments, the filter medium may consist of active carbon to reduce the waters Cl-content, its Pb-content or its Geosmin-content.

In another embodiment, the pump is configured to press the liquid or a gas into the storage container, i.e. the pump is a liquid pump, or a gas pump in particular a pneumatic pump. The pump may especially press the liquid, which is to be filtered, a gas or air into the storage container.

For example, the filtration device is designed for filtering water. The pump may be fluidically coupled to a water source directly or via a throttle. Whilst the storage container is supplied with water from the water source, the pump may regulate the pressure within the storage container. In this embodiment, the storage container just needs an inlet for the unfiltered water from the water source, but no further inlet for e.g. air.

Alternatively and preferably, the pump is configured to press air into the storage container. Due to its compressibility, air may be used for a precise adjustment of the pressure within the storage container. Additionally, the usage of air makes the filtration device independent from any supply of liquid or gas, once it is filled with the unfiltered liquid.

In another embodiment, the filtration device comprises an indicating device for indicating the current pumping capacity of the pump and/or the current filter medium performance.

The indicating device enables a user to review the status of the filter medium. The review may be done directly by indicating the filtering performance itself or indirectly by indicating the current pumping capacity, which is associated with the filtering performance of the filter medium, or by indicating the parameter relation D. If the filter medium is depleted or inactive or if the pumping capacity is below a lower pumping capacity threshold, especially if the pump does not pump anymore, the indicating device informs the user that the filter medium or the container containing the filter medium has to be exchanged or that the filter medium has to be reactivated. Thus, the indicating device may be used to indicate the end of the lifetime of the filter medium.

According to a preferred embodiment, the end of the filter mediums lifetime is correlated with a preset minimum parameter relation $D_{min}$ with $D_{min} < D_1$. If the parameter relation D falls below $D_{min}$, a further reduction in air pressure cannot result in a significant improvement of the filter performance or the user would have to wait for too long for the liquid to be filtered. Advantageously, if a parameter relation $D < D_{min}$ is determined, the indicating device may signal the end of the lifetime of the filter medium.

In another aspect, the invention relates to a filtration system comprising the aforementioned filtration device and a filter container filled with a filter medium being mounted in the mounting. Preferably, the filter container is a filter cartridge.

In another aspect, the invention relates to a method for filtering a liquid in a filtration device. A liquid to be filtered flows through a filter medium and leaves the filter medium as a filtered liquid, wherein the liquid to be filtered is subjected to a gauge pressure $P_g$. A parameter characterizing the quality of the liquid is continuously monitored, wherein a first value $y_1$ of the parameter is measured in the unfiltered liquid and a second value $y_2$ of the parameter is measured in the filtered liquid. A parameter relation $D = y_1 - y_2$ or $D = 1 - \dfrac{y_2}{y_1}$ is continuously determined, wherein the gauge pressure $P_g$ is reduced, at $D < D_1$, wherein $D_1$ is a preset first specific parameter relation.

Within the scope of this invention, the term "continuously" means on a regular time basis in intervals of several seconds, minutes or hours or on a regular volume basis in intervals of several liters being filtered.

The decreasing of the gauge pressure $P_g$ to increase the filtering performance may be repeated as long as the gauge pressure $P_g$ is sufficient to press the liquid through the filter medium and as long as the user is able to receive the filtered liquid in a practical time frame. A practical time frame for receiving filtered liquid is for example several minutes or some hours.

In one embodiment, the gauge pressure $P_g$ decreases according to the decreasing of the parameter relation D. In other words, the lower the parameter relation D, the lower the pressure $P_g$. In this embodiment, $D_1$ is a little smaller than a starting parameter relation $D_0$, wherein the starting parameter relation $D_0$ is the parameter relation D when the filtration device or the filtration method is used for the first time.

By decreasing the gauge pressure $P_g$, the flow velocity of the liquid through the filter medium is reduced accordingly. Thus, the filtering performance is adjusted to the usage of the filter medium enabling a constant or at least nearly constant filtering performance. For example, a commercial coffee making machine fitted with a filtration device, which is operated according to the described method, is able to provide coffee made from water with a constant quality and taste.

In an embodiment, the gauge pressure $P_g$ is increased at $D > D_2$, wherein $D_2$ is a preset second specific parameter relation.

In fact, the curve of the parameter relation may rise sometimes, for example if the filter medium reacts or regenerates while the filtration device is not used, e.g. over night. In this case, the sensors may determine a rising of the parameter relation D.

Advantageously, the pumping capacity may be increased to keep the filtration performance at a constant level or to accelerate the filtration process to improve the time for the user to wait for the filtered liquid.

The present invention will be described in detail with reference to the examples shown in the drawing, in which the following is shown:

Figure 1:  a schematic view of a filtration device according to an embodiment;

Figure 2:  a graph showing the filtration performance of a filtration device, which is operated according to an embodiment of the invention in comparison with the filtration performance of a filtration device, which is operated according to the state of the art.

Figure 3:  another graph showing the filtration performance of a filtration device, which is operated according to another embodiment of the invention in comparison with the filtration performance of a filtration device, which is operated according to the state of the art.

Figure 4:  another graph showing the filtration performance of a filtration device with a more realistic progression with a constant flow rate.

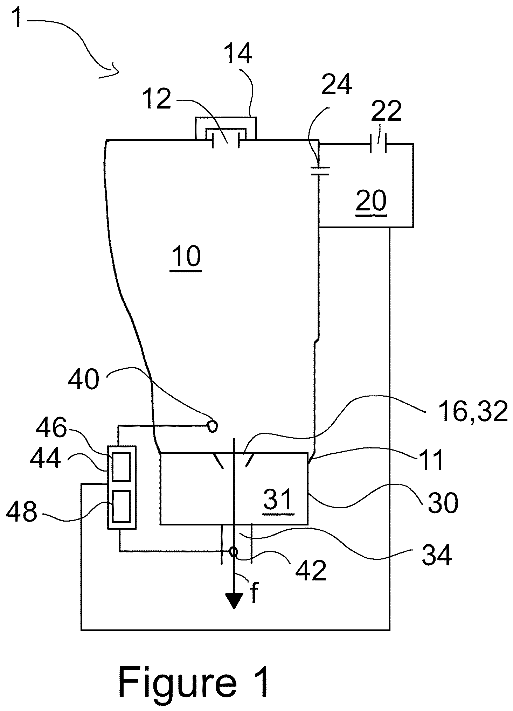

Figure 1 depicts a schematic view of a filtration device 1 according to an embodiment. The filtration device 1 comprises a storage container 10 having a liquid inlet 12 and a liquid outlet 16. The liquid inlet 12 is closed, preferably by a pressure-tight closure, especially by a cap 14. The cap 14 is removable for filling the storage container 10 with the liquid, i.e. water, to be filtered.

The cap 14 may be formed as a screw cap having a thread, wherein the cap is screwed onto the liquid inlet 12 having a thread, too. Alternatively, the cap 14 may be a blind flange, which is fastened onto the liquid inlet 12 by a bayonet fastener or any similar means.

The cap 14 is configured to withstand the gauge pressure $P_g$ within the storage container 10. The maximum of the gauge pressure $P_g$ may be for example 1.2 bar, preferably 1.5 bar and especially 2.0 bar.

The gauge pressure $P_g$ is created by a pump 20, which is attached and fluidically coupled to the storage container 10 and thus a part of the filtering device. The pump 20 comprises a pump inlet 22 and a pump outlet 24.

The pump 20 sucks in liquid, i.e. water, a gas or air through the pump inlet 22. The liquid or air is pumped into the storage container 10 through the pump outlet 24, which is fluidically and directly coupled to the interior space of the storage container 10. In another embodiment, (which is not shown here) the pump 20 may be fluidically but indirectly coupled to the interior space of the storage container 10 by a liquid line or an air line. In yet another embodiment, (which is not shown here), the storage container 10 does not include a liquid inlet 12 and no cap 14, because the container is fed with the liquid by the pump outlet 24.

The interior space of the storage container 10 is fluidically coupled to a filter container 30 through the liquid outlet 16. The filter container 30 comprises a filter inlet 32. In the embodiment shown, the liquid outlet 16 and the filter inlet 32 are a common part. In another embodiment the liquid outlet 16 and the filter inlet 32 may be fluidically coupled by a liquid line or a gas line.

The filter container 30 can be designed as a filter cartridge filled with a filter medium 31. The filter cartridge can be replaced if the filter medium 31 is depleted or needs to be reactivated or the like. For receiving the filter cartridge, the filtration device comprises a mounting 11 for the filter cartridge. Furthermore, the filter cartridge may comprise an upper part comprising holes, wherein the holes represent the filter inlet 32. Thus, the holes within the upper part of the cartridge may define the liquid outlet 16.

The filter container 30 further comprises a filter outlet 34. In Figure 1 filter outlet 34 is designed like a free outlet. Filter outlet 34 may be fluidically coupled to a tap (not shown), from which the user of the filtration device may receive the filtered water. Alternatively, the filter outlet 34 may be fluidically coupled to any machine, which uses the filtered liquid. For example, the filter outlet 34 may be fluidically coupled to a coffee machine, which uses filtered water for the production of coffee, or a bread-baking machine for moistening an oven with the filtered water. In another embodiment the filter outlet 34 is a free end, from which the filtered liquid can be received.

The flow direction of the liquid within the filtration device is indicated by the arrow f.

A first sensor 40 is placed within the storage container 10. The first sensor 40 determines a first value $y_1$ of a parameter from the unfiltered water, wherein the parameter characterizes the liquid. The term "value" refers to the numerical value of the parameter, i.e. the electronical output of the sensor. On the other hand, the parameter refers to a physical property of the liquid. For example, the parameter may be the water hardness, its conductibility, its Ca-content, its Fe-content, its Geosmin-content etc.

A second sensor 42 is placed within or at the filter outlet 34. The second sensor determines a second value $y_2$ of the parameter. The second value $y_2$ is determined from the liquid after it is filtered.

In this embodiment, the first sensor 40 and the second sensor 42 both are communicatively coupled to a control unit 44. The control unit 44 comprises a memory unit 46 and a processing unit 48. Correlating data for assigning the parameter relation D to a nominal pumping capacity is stored within the memory unit 46. The processing unit 48 is configured to load the correlating data from the memory unit 46 and to send a signal to the pump 20, which contains the nominal pumping capacity for readjusting the pump 20. Therefore, the control unit 44 and the pump 20 are communicatively coupled to each other.

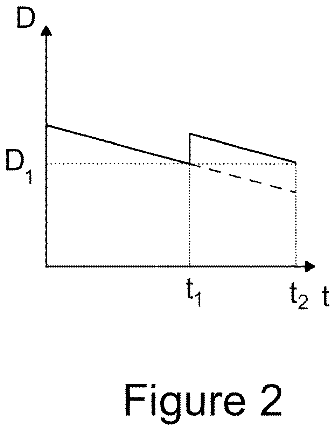

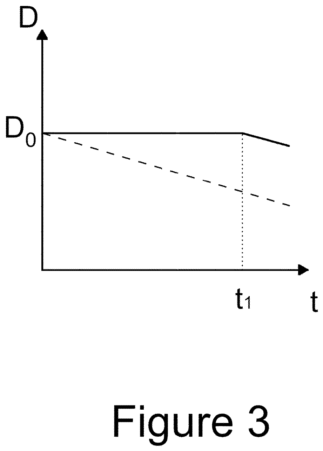

Figure 2 and Figure 3 show two graphs, which depict the parameter relation D over time t, which in particular relates to the time the filter medium is used. In Figures 2 and 3, the parameter relation is defined as $D = y_1 - y_2$. Graphs depicting the parameter relation D defined as $1 - \dfrac{y_2}{y_1}$ would look different. The dashed lines show the parameter relation D for a filtration device that is used according to the state of the art. The straight lines show the parameter relation D over time for a filtration device that is used according to the invention.

Figure 2 and Figure 3 show the parameter relation D over time t for a filtration device being operated in two different operation modes.

In Figure 2, the parameter relation D decreases for both the filtration device being operated according to the state of the art and the filtration device being operated according to the invention. Until the time $t_1$ is reached, the line indicating the curve progression according to the invention superposes the dashed line indicating the curve progression according to the state of the art. Until then, the flow rate of the liquid through the filter medium is at 100%.

At $t_1$ the sensors of the filtration device determine values for the parameter, wherein their parameter relation D has reached a preset first specific parameter relation $D_1$. Upon determining the parameter relation D being smaller than the first specific parameter relation $D_1$, the pump of the filtration device is adjusted to decrease its pumping capacity, which decreases the gauge pressure $P_g$ within the storage container. The decreased gauge pressure $P_g$ presses the liquid slower through the filter medium than before giving the filter medium more time to interact with the liquid and thus, the filtration performance of the liquid is improved. Now, the flow rate of the liquid through the filter medium is reduced. The increased filtration performance is indicated by a rise of the curve progression of the straight line. Thus, the lifetime of the filter medium is increased.

In an embodiment, the pumping capacity may be adapted another time to increase the lifetime of the filter medium even further, for example at the time $t_2$. The lifetime of the filter medium may be increased until the pumping capacity is so low that it is impractical for a user to wait for the liquid to be filtered or until the pressure is too low to press the liquid through the filter medium.

Figure 3 shows another mode for operating a filtration device. Both the filtration device operated according to the state of the art and the filtration device operated according to the invention have a filter medium with a filtration performance that is indicated by a starting parameter relation $D_0$ at the beginning of its lifetime. As stated before, the filtration performance of the filter medium in the filtration device being operated according to the state of the art decreases over time (dashed line).

The sensors of the filtration device detect the decreasing parameter relation D. In this embodiment, the pump is configured to decrease its pumping capacity according to the decreasing parameter relation D. In this way, the effect of the decreasing filtering performance due to usage and the increasing filtering performance due to more reaction time for the liquid with the filter medium compensate each other out. Thus, the filtering performance is kept on a constant or at least nearly constant level, while the flow rate of the liquid through the filter medium is decreasing.

At the time $t_1$, the parameter relation D starts to decrease. In this mode, this may happen if the filter medium is nearly depleted or used so much that the pump cannot decrease its pumping capacity any further to compensate the decreasing filtration performance. Thus, the flow rate of the liquid through the filter medium is at a constant and low level. In other words, the user soon will have to wait too long for the liquid to be filtered or the pressure $P_g$ will be insufficient to press the liquid through the filter medium.

Both Figure 2 and Figure 3 show idealized cases, in which the curves of the parameter relation D are smooth straight lines. In reality, the parameter relation D will be subject to fluctuations as the determined values of the parameter are subject to fluctuations. The fluctuations may be caused by measurement errors of the sensors, fluctuations of the power supply of the pump, which cause fluctuations within the pressure $P_g$, fluctuating quality of the liquid, e.g. fluctuating water hardness etc. The curves shown here will be represented as trends in real data.

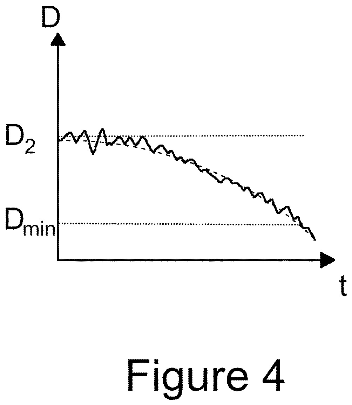

Figure 4 shows another graph depicting the progression of the parameter relation D over time, wherein D is defined as $D = y_1 - y_2$. The graph is supposed to show an example for a more realistic progression of the parameter relation D than the graphs in Figures 2 and 3.

In the beginning, the parameter relation D rises above a second specific parameter relation $D_2$ for a few times. The parameter relation D being at or above the second specific parameter relation $D_2$ means that the filter medium is actually filtering more than it is supposed to or more than necessary. This effect comes, for example, from the filter medium regenerating overnight or a changing quality of the unfiltered liquid. To keep the quality of the filtered medium constant or to spare the filter medium for providing a longer lifetime, the filtering performance and the exceeding pressure $P_g$ are decreased by reducing the pumping capacity of the pump.

The dashed line in Figure 4 shows the overall trend of the decreasing parameter relation D due to the decreasing filtering performance of the filter medium. At some point, the parameter relation D will fall below a minimum parameter relation $D_{min}$, which indicates, that the filter medium or the filter container containing the filter medium has to be exchanged.

## Claims

1. Filtration device (1) for filtering a liquid, the filtration device (1) comprising

    • a storage container (10) for unfiltered liquid,
    • a mounting (11) for a filter container (30),
    • a filter container (30) filled with a filter medium (31) being mounted in the mounting (11), wherein a filtering performance, corresponding to a ratio of an amount of substances filtered from the liquid over an amount of liquid being filtered, improves with increasing time of interaction between the liquid and the filter medium,
    • a first sensor (40) that is configured to determine a first value $y_1$ of a parameter of the unfiltered liquid, wherein the first sensor (40) is an electric, electronic or electrochemical sensor that generates electric signals depending on the measured parameter,
    • a pump (20) fluidically coupled to the storage container (10) and communicatively coupled to the first sensor (40) and
    • a control unit (44), wherein the control unit (44) comprises a memory unit (46) and a processing unit (48) and is communicatively coupled to the first sensor (40) and the pump (20),

    wherein the pump (20) is configured to generate a gauge pressure $P_g$ in the storage container (10) during the filtering of the unfiltered liquid, **characterized in**

    **that** the filtration device (1) comprises a second sensor (42), which is configured to determine a second value $y_2$ of the parameter of the filtered liquid and is an electric, electronic or electrochemical sensor that generates electric signals depending on the measured parameter,
    in that the pump (20) is communicatively coupled to the second sensor (42), and is configured to reduce the gauge pressure $P_g$ during the filtration process if a parameter relation D = $y_1 - y_2$ or $D = 1 - \dfrac{y_2}{y_1}$ is lower than a preset first specific parameter relation $D_1$,
    in that the control unit (44) is communicatively coupled to the second sensor (42), and
    in that the processing unit (48) is configured to set the pumping capacity of the pump (20) according to the parameter relation D.

2. Filtration device (1) according to claim 1, **characterized in that** the liquid is water and the parameter is the carbonate hardness of the water.

3. Filtration device (1) according to claim 1 or 2, **characterized in that** the pump (20) is configured to press the liquid or a gas into the storage container (10) in order to generate the gauge pressure $P_g$.

4. Filtration device according to any of claims 1 to 3, **characterized in that** the filtration device (1) comprises an indicating device for indicating the current pumping capacity of the pump (20) and/or the current filter medium performance.

5. Method for filtering a liquid in a filtration device (1) according to any of the claims 1 to 4, wherein a liquid to

    be filtered flows through a filter medium (31) and leaves the filter medium (31) as a filtered liquid, wherein a filtering performance, corresponding to a ratio of an amount of substances filtered from the liquid over an amount of liquid being filtered, improves with increasing time of interaction between the liquid and the filter medium, **characterized in**

    **that** the liquid to be filtered is subjected to a gauge pressure $P_g$, wherein a parameter characterizing the quality of the liquid is continuously monitored, wherein a first value $y_1$ of the parameter is measured in the unfiltered liquid and a second value $y_2$ of the parameter is measured in the filtered liquid,
wherein a parameter relation $D = y_1 - y_2$ or

$$D = 1 - \frac{y_2}{y_1}$$ is continuously determined, and
wherein the gauge pressure $P_g$ is reduced, at $D < D_1$, wherein $D_1$ is a preset first specific parameter relation.

**6.** Method according to claim 5, **characterized in that** the gauge pressure Pg is increased at D > D2, wherein D2 is a preset second specific parameter relation.

**Patentansprüche**

**1.** Filtrationsvorrichtung (1) zum Filtern einer Flüssigkeit, wobei die Filtrationsvorrichtung (1) Folgendes umfasst:

> - einen Vorratsbehälter (10) für ungefilterte Flüssigkeit,
> - eine Halterung (11) für einen Filterbehälter (30),
> - einen mit einem Filtermedium (31) gefüllten Filterbehälter (30), der in der Halterung (11) montiert ist,
> wobei sich eine Filterleistung, die einem Verhältnis einer Menge der aus der Flüssigkeit gefilterten Substanzen zu einer Menge der zu filternden Flüssigkeit entspricht, mit zunehmender Zeit der Wechselwirkung zwischen der Flüssigkeit und dem Filtermedium verbessert,
> - einen ersten Sensor (40), der dazu konfiguriert ist, einen ersten Wert $y_1$ eines Parameters der ungefilterten Flüssigkeit zu bestimmen, wobei der erste Sensor (40) ein elektrischer, elektronischer oder elektrochemischer Sensor ist, der elektrische Signale erzeugt, die von dem gemessenen Parameter abhängen,
> - eine Pumpe (20), die fluidisch mit dem Vorratsbehälter (10) und kommunikativ mit dem ersten Sensor (40) gekoppelt ist, und
> - eine Steuereinheit (44), wobei die Steuereinheit (44) eine Speichereinheit (46) und eine Verarbeitungseinheit (48) umfasst und kommunikativ mit dem ersten Sensor (40) und der Pumpe (20) gekoppelt ist,
> wobei die Pumpe (20) dazu konfiguriert ist, während das Filterns der ungefilterten Flüssigkeit einen Überdruck $P_g$ in dem Vorratsbehälter (10) zu erzeugen,
> **dadurch gekennzeichnet,**
> **dass** die Filtrationsvorrichtung (1) einen zweiten Sensor (42) umfasst, der dazu konfiguriert ist, einen zweiten Wert $y_2$ des Parameters der

gefilterten Flüssigkeit zu bestimmen und ein elektrischer, elektronischer oder elektrochemischer Sensor ist, der elektrische Signale erzeugt, die von dem gemessenen Parameter abhängen,
**dass** die Pumpe (20) kommunikativ mit dem zweiten Sensor (42) gekoppelt ist und dazu konfiguriert ist, den Überdruck $P_g$ während des Filtrationsprozesses zu reduzieren, wenn eine Parameterbeziehung $D = y_1 - y_2$ oder

$$D = 1 - \frac{y_2}{y_1}$$ kleiner ist als eine voreinge-

stellte erste spezifische Parameterbeziehung $D_1$,
**dass** die Steuereinheit (44) kommunikativ mit dem zweiten Sensor (42) gekoppelt ist, und
**dass** die Verarbeitungseinheit (48) dazu konfiguriert ist, die Pumpleistung der Pumpe (20) gemäß der Parameterbeziehung D einzustellen.

**2.** Filtrationsvorrichtung (1) nach Anspruch 1, **dadurch gekennzeichnet, dass** die Flüssigkeit Wasser ist und der Parameter die Karbonathärte des Wassers ist.

**3.** Filtrationsvorrichtung (1) nach Anspruch 1 oder 2, **dadurch gekennzeichnet, dass** die Pumpe (20) dazu konfiguriert ist, die Flüssigkeit oder ein Gas in den Vorratsbehälter (10) hinein zu drücken, um den Überdruck $P_g$ zu erzeugen.

**4.** Filtrationsvorrichtung nach einem der Ansprüche 1 bis 3, **dadurch gekennzeichnet, dass** die Filtrationsvorrichtung (1) eine Angabevorrichtung zum Angeben der aktuellen Pumpleistung der Pumpe (20) und/oder die aktuelle Leistung des Filtermediums umfasst.

**5.** Verfahren zum Filtern einer Flüssigkeit in einer Filtrationsvorrichtung (1) nach einem der Ansprüche 1 bis 4, wobei eine zu filternde Flüssigkeit durch ein Filtermedium (31) fließt und das Filtermedium (31) als gefilterte Flüssigkeit verlässt,

> wobei sich eine Filterleistung, die einem Verhältnis einer Menge der aus der Flüssigkeit gefilterten Substanzen zu einer Menge der zu filternden Flüssigkeit entspricht, mit zunehmender Zeit der Wechselwirkung zwischen der Flüssigkeit und dem Filtermedium verbessert,
> **dadurch gekennzeichnet,**
> **dass** die zu filternde Flüssigkeit einem Überdruck $P_g$ ausgesetzt wird, wobei ein die Qualität der Flüssigkeit charakterisierender Parameter kontinuierlich überwacht wird, wobei ein erster Wert $y_1$ des Parameters in der ungefilterten Flüssigkeit und ein zweiter Wert $y_2$ des Parameters in der gefilterten Flüssigkeit gemessen wird,

wobei eine Parameterbeziehung D = $y_1$ - $y_2$ oder $D = 1 - \frac{y_2}{y_1}$ kontinuierlich bestimmt wird, und

wobei der Überdruck $P_g$ bei D < $D_1$ reduziert wird, wobei $D_1$ eine voreingestellte erste spezifische Parameterbeziehung ist.

6. Verfahren nach Anspruch 5, **dadurch gekennzeichnet, dass** der Überdruck Pg bei D > D2 erhöht wird, wobei D2 eine voreingestellte zweite spezifische Parameterbeziehung ist.


**Revendications**

1. Dispositif de filtration (1) pour filtrer un liquide, le dispositif de filtration (1) comprenant

     - un récipient de stockage (10) pour liquide non filtré,
     - un support (11) pour un récipient filtrant (30),
     - un récipient filtrant (30) rempli d'un milieu filtrant (31) étant monté dans le support (11),
     dans lequel une performance filtrante, correspondant à un rapport d'une quantité de substances filtrées du liquide à une quantité de liquide étant filtré, s'améliore avec l'augmentation du temps d'interaction entre le liquide et le milieu filtrant,
     - un premier capteur (40) qui est configuré pour déterminer une première valeur $y_1$ d'un paramètre du liquide non filtré, dans lequel le premier capteur (40) est un capteur électrique, électronique ou électrochimique qui génère des signaux électriques en fonction du paramètre mesuré,
     - une pompe (20) couplée fluidiquement au récipient de stockage (10) et couplée en communication au premier capteur (40) et
     - une unité de commande (44), dans lequel l'unité de commande (44) comprend une unité de mémoire (46) et une unité de traitement (48) et est couplée en communication au premier capteur (40) et à la pompe (20),
     dans lequel la pompe (20) est configurée pour générer une pression manométrique $P_g$ dans le récipient de stockage (10) pendant la filtration du liquide non filtré,
     **caractérisé en ce**
     **que** le dispositif de filtration (1) comprend un second capteur (42), qui est configuré pour déterminer une seconde valeur $y_2$ du paramètre du liquide filtré et est un capteur électrique, électronique ou électrochimique qui génère des signaux électriques en fonction du paramètre mesuré,
     **que** la pompe (20) est couplée en communication au second capteur (42), et est configurée pour réduire la pression manométrique $P_g$ pendant le processus de filtration si une relation de paramètre D = $y_1$- $y_2$ ou $D = 1 - \frac{y_2}{y_1}$ est inférieure à une première relation de paramètre spécifique prédéfinie $D_1$,
     **que** l'unité de commande (44) est couplée en communication au second capteur (42), et
     **que** l'unité de traitement (48) est configurée pour régler la capacité de pompage de la pompe (20) en fonction de la relation de paramètre D.

2. Dispositif de filtration (1) selon la revendication 1, **caractérisé en ce que** le liquide est de l'eau et le paramètre est la dureté carbonatée de l'eau.

3. Dispositif de filtration (1) selon la revendication 1 ou 2, **caractérisé en ce que** la pompe (20) est configurée pour presser le liquide ou un gaz dans le récipient de stockage (10) afin de générer la pression manométrique $P_g$.

4. Dispositif de filtration selon l'une quelconque des revendications 1 à 3, **caractérisé en ce que** le dispositif de filtration (1) comprend un dispositif indicateur pour indiquer la capacité de pompage actuelle de la pompe (20) et/ou les performances de milieu filtrant actuelles.

5. Procédé de filtration d'un liquide dans un dispositif de filtration (1) selon l'une quelconque des revendications 1 à 4, dans lequel un liquide à filtrer s'écoule à travers un milieu filtrant (31) et quitte le milieu filtrant (31) en tant que liquide filtré,

     dans lequel une performance filtrante, correspondant à un rapport d'une quantité de substances filtrées du liquide à une quantité de liquide étant filtré, s'améliore avec l'augmentation du temps d'interaction entre le liquide et le milieu filtrant,
     **caractérisé en ce**
     **que** le liquide à filtrer est soumis à une pression manométrique $P_g$, dans lequel un paramètre caractérisant la qualité du liquide est surveillé en continu, dans lequel une première valeur $y_1$ du paramètre est mesurée dans le liquide non filtré et une seconde valeur $y_2$ du paramètre est mesurée dans le liquide filtré,
     dans lequel une relation de paramètre D = $y_1$ - $y_2$ ou $D = 1 - \frac{y_2}{y_1}$ est continuellement déterminée, et

dans lequel la pression manométrique $P_g$ est réduite, à $D < D_1$, dans lequel $D_1$ est une première relation de paramètre spécifique prédéfinie.

6. Procédé selon la revendication 5, **caractérisé en ce que** la pression manométrique $P_g$ est augmentée à $D > D2$, dans lequel $D2$ est une seconde relation de paramètre spécifique prédéfinie.

Figure 1

Figure 2

Figure 3

Figure 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102014102583 A1
- US 6024867 A
- US 20160121246 A1
- US 20120217197 A1
- DE 69909760 T2
- DE 102007062925 A1
- EP 2471745 A1
- US 20130199974 A1